# EUROPEAN PATENT SPECIFICATION

(11) **EP 4 410 612 B1**
(45) Date of publication and mention of the grant of the patent: **11.03.2026**
(21) Application number: 23197133.4
(22) Date of filing: 13.09.2023
(51) Int. Cl.: B60T 7/04, B60T 13/74, F16D 125/40

(54) **BRAKE DEVICE FOR VEHICLE**
BREMSVORRICHTUNG FÜR EIN FAHRZEUG
DISPOSITIF DE FREINAGE POUR VÉHICULE

(30) Priority: 06.02.2023 KR 20230015511
(43) Date of publication of application: 07.08.2024
(73) Proprietor: Hyundai Mobis Co., Ltd., Gangnam-gu Seoul 06141 (KR)
(72) Inventor: YUN, Seung Hyun, 16891 Yongin-si, Gyeonggi-do (KR)
(74) Representative: Frenkel, Matthias Alexander

(56) References cited:
- CN-A- 112 277 906
- DE-A1- 102019 204 554

## Description

### BACKGROUND

### FIELD

The present disclosure relates to a brake device for a vehicle, and more particularly, to a brake device for a vehicle, which is capable of implementing regenerative braking.

### DISCUSSION OF THE BACKGROUND

An electric brake system for a vehicle is a brake system that generates a braking force by using an electric caliper that is electronically controlled without mechanical connection. In general, an electric brake system applied to an electric vehicle implements regenerative braking.

To implement regenerative braking in the electric brake system in the related art, a separate independent chamber such as a valve is provided to structurally separate the electric brake system so that a force of a pedal is not transmitted to the force generated by the motor in order to eliminate heterogeneity of a pedal effort in a regenerative braking section.

In the case of the electric vehicle, a regenerative braking force is generated when a driver releases an accelerator pedal while the electric vehicle travels. There is a problem in that at the initial time of pushing the brake pedal, the driver feels great heterogeneity of the pedal effort corresponding to regenerative braking. Therefore, there is a need to solve the problems.

The background technology of the present disclosure is disclosed in DE102019204554A1, CN112277906A and in Korean Patent No. 10-2372394 (published on March 11, 2022 and entitled 'Brake Device for Vehicle').

### SUMMARY

The invention is defined by the appended claims.

According to the present disclosure, it is possible to improve regenerative braking performance and increase the amount of regenerative braking.

In addition, according to the present disclosure, it is possible to minimize an increase in number of components and implement pedal pressure feel without increasing a layout.

In addition, according to the present disclosure, it is possible to reduce heterogeneity of a pedal effort during regenerative braking.

### BRIEF DESCRIPTION OF THE DRAWINGS

FIG. 1 is a cross-sectional view illustrating a brake device for a vehicle according to an embodiment of the present disclosure.
FIGS. 2 and 3 are perspective view illustrating a motion conversion part of the brake device for a vehicle according to the embodiment of the present disclosure.
FIG. 4 is an exploded perspective view of FIG. 2.
FIG. 5 is an exploded perspective view illustrating a pedal simulator of the brake device for a vehicle according to the embodiment of the present disclosure.
FIG. 6 is a cross-sectional view illustrating a normal braking operating state of the brake device for a vehicle according to the embodiment of the present disclosure.
FIG. 7 is a cross-sectional view illustrating a back-up operating state of the brake device for a vehicle according to the embodiment of the present disclosure.

### DETAILED DESCRIPTION OF THE ILLUSTRATED EMBODIMENTS

Hereinafter, a brake device for a vehicle according to the present disclosure will be described below with reference to the accompanying drawings through various exemplary embodiments. Here, thicknesses of lines illustrated in the drawings, sizes of constituent elements, or the like may be exaggerated for clarity and convenience of description. In addition, the terms used below are defined in consideration of the functions thereof in the present disclosure and may vary depending on the intention of a user or an operator or a usual practice. Therefore, the definition of the terms should be made based on the entire contents of the present specification.

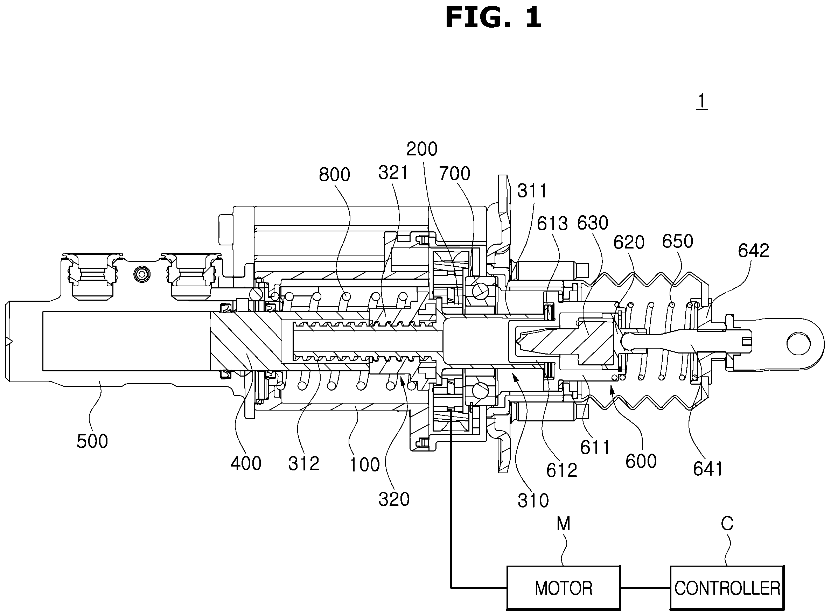

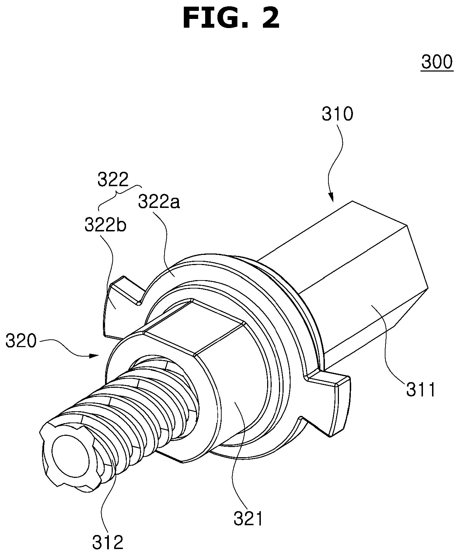

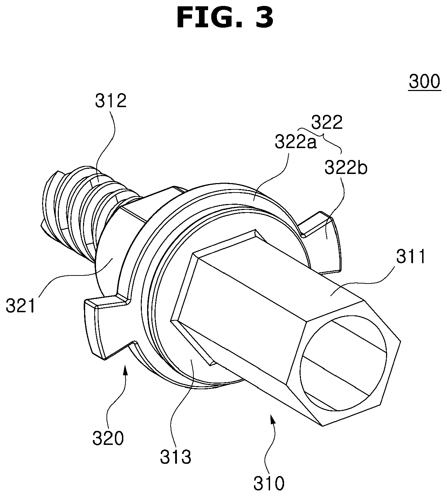

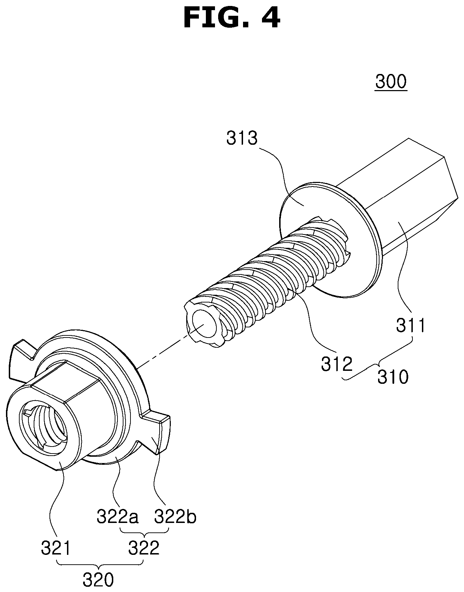

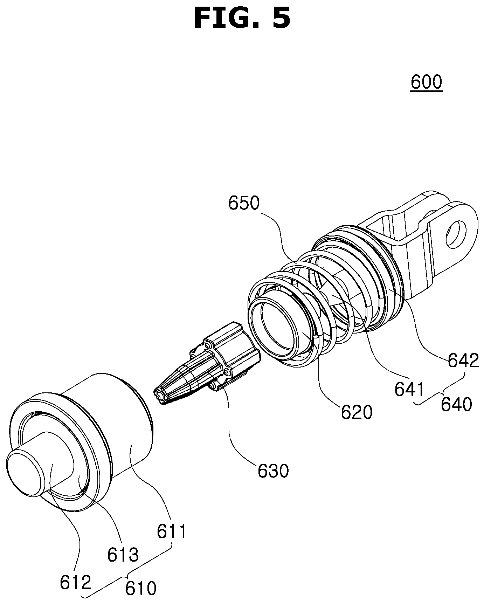

FIG. 1 is a cross-sectional view illustrating a brake device for a vehicle according to an embodiment of the present disclosure, FIGS. 2 and 3 are perspective view illustrating a motion conversion part of the brake device for a vehicle according to the embodiment of the present disclosure, FIG. 4 is an exploded perspective view of FIG. 2, and FIG. 5 is an exploded perspective view illustrating a pedal simulator of the brake device for a vehicle according to the embodiment of the present disclosure.

With reference to FIGS. 1 to 5, a brake device 1 for a vehicle according to an embodiment of the present disclosure includes a housing part 100, a gear part 200, a motion conversion part 300, a piston part 400, a master cylinder part 500, a pedal simulator part 600, a first bearing part 700, and a first elastic part 800. These components will be described in detail.

The housing part 100 has a hollow shape having an internal space. A motor M is provided at an outer side of the housing part 100.

The gear part 200 is rotatably disposed in the housing part 100. The gear part 200 may be positioned inside the housing part 100. Alternatively, the gear part 200 may be disposed at one side of the housing part 100 and rotatably connected to the housing part 100. The gear part 200 is connected to the motor M positioned at the outer side of the housing part 100 and rotates in response to a rotational force received the motor M. The gear part 200 may be formed in a hollow shape penetrated by a central portion thereof.

The first bearing part 700 may be disposed within (e.g., installed in) the housing part 100, and the gear part 200 may be rotatably connected to the first bearing part 700. An outer race of the first bearing part 700 may adjoin an inner surface of the housing part 100, and an inner race of the first bearing part 700 may adjoin an outer surface of the gear part 200.

The motion conversion part 300 is installed in the housing part 100 and coupled to the gear part 200. The motion conversion part 300 may serve to convert a rotational motion of the gear part 200 into a rectilinear motion and include a screw bolt part 310 and a nut part 320.

In one embodiment of the motion conversion part 300, the screw bolt part 310 may be coupled to the gear part 200 and rotate together with the gear part 200, and the nut part 320 may be coupled to the screw bolt part 310 and rectilinearly move along the screw bolt part 310.

As another embodiment of the motion conversion part 300 not part of the present invention, the nut part 320 may be coupled to the gear part 200 and rotate together with the gear part 200, and the screw bolt part 310 coupled to the nut part 320 may be rectilinearly moved in an axial direction by the rotation of the nut part 320. In this case, the piston part 400 to be described below may be coupled to the screw bolt part 310 configured to rectilinearly move.

Hereinafter, an embodiment will be described in which the nut part 320 coupled to the screw bolt part 310 of the motion conversion part 300 of the brake device 1 for a vehicle according to the present disclosure is configured to rectilinearly move along the screw bolt part 310.

The screw bolt part 310 is installed inside the housing part 100. The screw bolt part 310 is movably accommodated in the housing part 100. The screw bolt part 310 is disposed in a longitudinal direction of the housing part 100.

The screw bolt part 310 is slidably coupled to the gear part 200. More specifically, the screw bolt part 310 may penetrate the central portion of the gear part 200 and be slidably coupled to the inside of the gear part 200. The screw bolt part 310 may reciprocate straight in the longitudinal direction of the housing part 100. The screw bolt part 310 may rotate together with the gear part 200 in a direction identical to the rotation direction of the gear part 200.

The screw bolt part 310 may include a bolt body part 311 and a screw shaft 312.

The bolt body part 311 may penetrate the central portion of the gear part 200 and be axially coupled to the gear part 200. The bolt body part 311 may slide inside the gear part 200. The bolt body part 311 may be formed in a prismatic shape. More specifically, a transverse section of the bolt body part 311 may be formed in a polygonal shape having an angled edge.

An inner diameter of the gear part 200 may be equal to an outer diameter of the bolt body part 311 so that the gear part 200 and the bolt body part 311, which rotate, engage with each other. One end (right side based on FIG. 1) of the bolt body part 311 may be formed in an opened, hollow shape having an empty space. A damper holder part 610 of the pedal simulator part 600 may be inserted into the bolt body part 311, such that the damper holder part 610 may be accommodated in the bolt body part 311.

The screw shaft 312 is positioned at one end (left side based on FIG. 1) of the bolt body part 311. The screw shaft 312 may be integrated with the bolt body part 311. The screw shaft 312 and the bolt body part 311 may be disposed on the same axis. The screw shaft 312 axially rotates in a direction identical to the rotation direction of the bolt body part 311 that is rotated by the rotation of the gear part 200.

A screw thread may be formed on an outer surface of the screw shaft 312 and disposed along an outer diameter of the screw shaft 312. The nut part 320 is spirally coupled to the screw shaft 312. The nut part 320 reciprocates straight in the axial direction of the screw shaft 312 in the rotation direction of the screw shaft 312.

The nut part 320 is coupled to the screw bolt part 310 and moves along the screw bolt part 310. The nut part 320 may include a nut body part 321 and an anti-rotation part 322.

The nut body part 321 is spirally coupled to the screw shaft 312. A screw thread may be formed on an inner surface of the nut body part 321 and disposed along an inner diameter of the nut body part 321.

The anti-rotation part 322 is provided on the nut body part 321. The anti-rotation part 322 may restrict a rotation of the nut body part 321 so that the nut body part 321, which moves along the screw shaft 312, is not rotated together with the screw shaft 312. The anti-rotation part 322 may be integrated with the nut body part 321. The anti-rotation part 322 may include a first seating portion 322a and a protruding portion 322b.

The first seating portion 322a may protrude from an outer peripheral edge of the nut body part 321. The first seating portion 322a may be formed in a circumferential direction of the nut body part 321. The first elastic part 800 is disposed (or seated) on an outer surface of the first seating portion 322a in a state in which one side (right side based on FIG. 1) of the first elastic part 800 is in contact with the outer surface of the first seating portion 322a. More specifically, one side of the first elastic part 800 is supported on the first seating portion 322a.

The first elastic part 800 is housed within (e.g., disposed inside) the housing part 100 and elastically supports the nut part 320. One side (left side based on FIG. 1) of the first elastic part 800 adjoins the inner surface of the housing part 100, and the other side (right side based on FIG. 1) of the first elastic part 800 adjoins an outer surface of the nut part 320. The first elastic part 800 provides an elastic force to the screw bolt part 310 to which the nut part 320 is coupled.

The first elastic part 800 is compressed by the nut part 320 that rectilinearly moves along the screw shaft 312. Alternatively, the first elastic part 800 is compressed by the screw bolt part 310 that rectilinearly slides in the gear part 200. The compressed first elastic part 800 restores the screw bolt part 310 to an original position by providing an elastic force (elastic restoring force) to the screw bolt part 310. The first elastic part 800 may be a coil spring that surrounds an outer side of the piston part 400.

The protruding portion 322b may protrude from an outer peripheral edge of the first seating portion 322a. The protruding portion 322b may be provided as a plurality of protruding portions 322b spaced apart from one another in a circumferential direction of the first seating portion 322a. The protruding portion 322b may adjoin the inner surface of the housing part 100. More specifically, the housing part 100 may have a guide part configured to guide the rectilinear movement of the nut part 320. The guide part may be recessed in the inner surface of the housing part 100. The guide part may be formed in the longitudinal direction of the housing part 100. The protruding portion 322b is positioned inside the guide part, and the protruding portion 322b moves along the guide part, such that the nut body part 321 may rectilinearly move without rotating.

The piston part 400 may be coupled to the nut part 320. More specifically, a rod part of the piston part 400 may be coupled to surround an outer side of the nut body part 321. The piston part 400 may rectilinearly move together with the nut part 320 in conjunction with the nut part 320. A head portion of the piston part 400 may be inserted into the master cylinder part 500 provided at one side (left side based on FIG. 1) of the housing part 100.

The master cylinder part 500 may be coupled to one side of the housing part 100. As another embodiment, the master cylinder part 500 may be integrated with the housing part 100. The master cylinder part 500 is formed in a hollow shape having an empty space. The inside of the housing part 100 and the inside of the master cylinder part 500 may communicate with each other. The piston part 400 may be inserted into the master cylinder part 500. The master cylinder part 500 generates hydraulic braking pressure by being pressed by the piston part 400.

The pedal simulator part 600 is slidably disposed at the other side (right side based on FIG. 1) of the housing part 100. The screw bolt part 310 is rotatably coupled to the pedal simulator part 600. The pedal simulator part 600 may include the damper holder part 610, a damper piston part 620, a damper part 630, a damper pressing part 640, and a second elastic part 650.

The damper holder part 610 is slidably disposed on the housing part 100. The bolt body part 311 is rotatably coupled to the damper holder part 610. The damper holder part 610 may include a holder body portion 611, a holder protruding portion 612, and a second bearing portion 613.

One end (right side based on FIG. 1) of the holder body portion 611 may be formed in an opened, hollow shape having an empty space. The holder body portion 611 may be slidably coupled to an inner side of the housing part 100.

The holder protruding portion 612 may be provided on the holder body portion 611. The holder protruding portion 612 may protrude from an outer surface (left surface based on FIG. 1) of the holder body portion 611 and be formed in a hollow shape having an empty space. The inside of the holder body portion 611 and the inside of the holder protruding portion 612 may communicate with each other. The damper part 630 is accommodated inside the holder body portion 611 and the holder protruding portion 612. A diameter of the holder protruding portion 612 may be smaller than a diameter of the holder body portion 611. The holder protruding portion 612 may be inserted into the bolt body part 311, and hence may have a portion extending into the body part 311.

The second bearing portion 613 is provided on the damper holder part 610. The second bearing portion 613 may be coupled to an outer surface of the damper holder part 610 that is directed toward the screw bolt part 310. More specifically, the second bearing portion 613 may be rotatably coupled to an outer surface (left surface based on FIG. 1) of the holder body portion 611 and provided to surround an outer periphery of the holder protruding portion 612. One end (right end based on FIG. 1) of the bolt body part 311 is seated on the second bearing portion 613. The second bearing portion 613 supports the bolt body part 311 so that the bolt body part 311 is rotatable. The second bearing portion 613 may support an axial load of the screw bolt part 310.

The damper piston part 620 may be slidably disposed on the damper holder part 610. More specifically, the damper piston part 620 may be movably accommodated in the holder body portion 611.

The damper part 630 may be coupled to the damper piston part 620. The damper part 630 may be accommodated inside the holder body portion 611 and the holder protruding portion 612 and compressed in the holder body portion 611 and the holder protruding portion 612 by the movement of the damper piston part 620. The damper part 630 may be manufactured by including an elastically deformable material. The damper part 630 may include rubber, silicone, plastic, or the like as the elastically deformable material.

The damper pressing part 640 is coupled to the damper piston part 620 and presses the damper piston part 620. The damper pressing part 640 may include a push rod portion 641 and a second seating portion 642.

The push rod portion 641 may be rotatably coupled to an outer surface (right surface based on FIG. 1) of the damper piston part 620 in a joint manner. In addition, the push rod portion 641 may be coupled to the damper piston part 620 by caulking.

The push rod portion 641 is axially coupled to the second seating portion 642. More specifically, the push rod portion 641 may penetrate a central portion of the second seating portion 642 and be coupled to the second seating portion 642. The second elastic part 650 is seated on the second seating portion 642.

The second elastic part 650 is installed between the damper pressing part 640 and the damper holder part 610 and elastically supports the damper pressing part 640. One side (right side based on FIG. 1) of the second elastic part 650 adjoins an outer surface of the second seating portion 642, and the other side (left side based on FIG. 1) of the second elastic part 650 adjoins one end of the holder body portion 611. The second elastic part 650 provides an elastic force to the damper pressing part 640 that is moved by an external force applied to the damper pressing part 640.

The second elastic part 650 is compressed by the second seating portion 642 that is moved by an external force applied to the damper pressing part 640. The compressed second elastic part 650 restores the second seating portion 642 to an original position by providing an elastic force (elastic restoring force) to the second seating portion 642. The second elastic part 650 may be a coil spring that surrounds an outer side of the push rod portion 641.

An operating process of the brake device for a vehicle according to the embodiment of the present disclosure configured as described above will be described below.

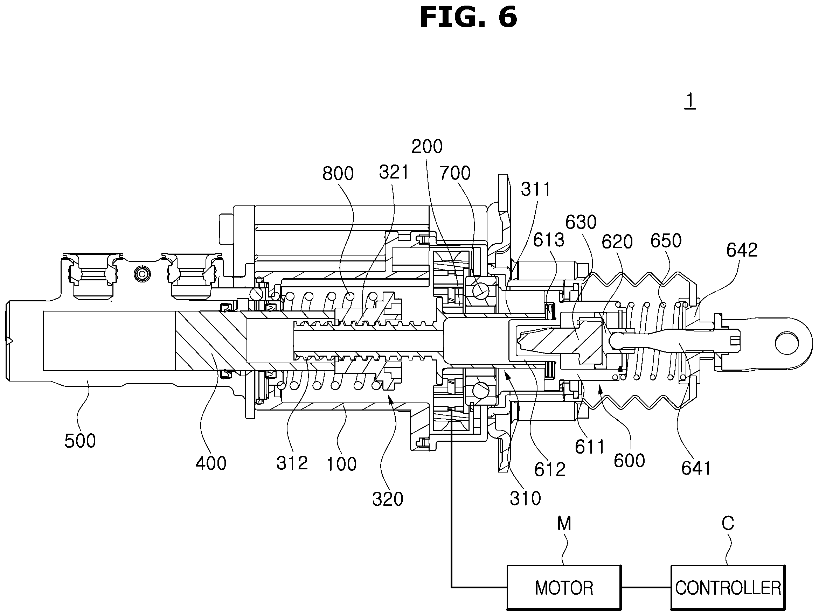

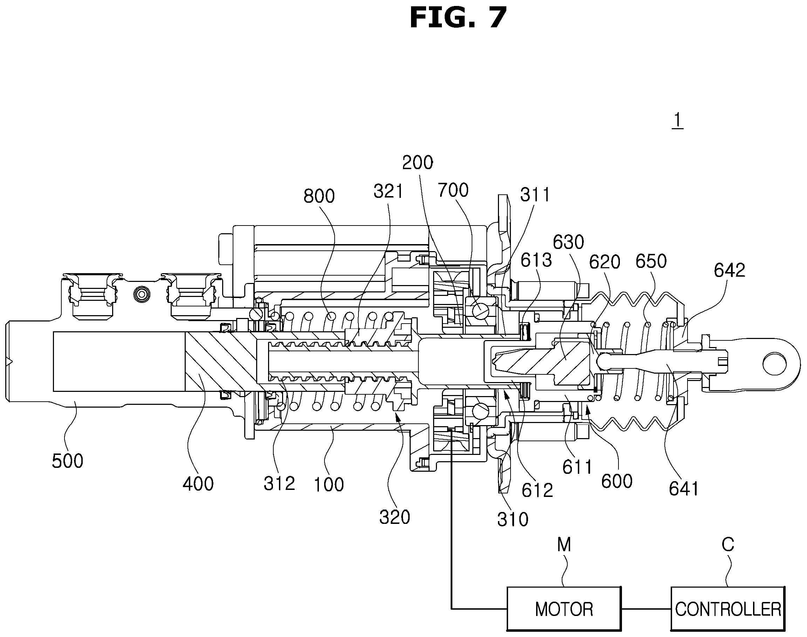

FIG. 6 is a cross-sectional view illustrating a normal braking operating state of the brake device for a vehicle according to the embodiment of the present disclosure, and FIG. 7 is a cross-sectional view illustrating a back-up operating state of the brake device for a vehicle according to the embodiment of the present disclosure.

With reference to FIG. 6, the motor M operates in response to a braking signal of a controller C, which is generated when the user pushes the pedal, and rotates the gear part 200, such that the gear part 200 rotates the bolt body part 311. The nut part 320 is moved along the screw shaft 312 (in a leftward direction based on FIG. 6) by the rotation of the bolt body part 311, and the hydraulic braking pressure is formed in the master cylinder part 500 by the piston part 400 coupled to the nut body part 321. In this case, the first elastic part 800 is compressed by the movement of the nut part 320.

The screw bolt part 310 is not moved but fixed in position by the elastic force of the compressed first elastic part 800 and the hydraulic pressure reaction force applied to the screw bolt part 310 through the piston part 400 by the movement of the nut part 320. The position of the pedal simulator part 600 is also fixed as the position of the screw bolt part 310 is fixed.

When the damper pressing part 640 is pressed by an external force, the damper pressing part 640 moves toward the damper holder part 610. The second elastic part 650 is compressed and deformed by being pressed by the second seating portion 642 by the movement of the damper pressing part 640. When the second elastic part 650 is compressed, the user may feel initial braking performance.

When the external force is continuously applied to the damper pressing part 640 and the push rod portion 641 presses the damper piston part 620, the damper piston part 620 compresses the damper part 630 while moving toward the inside of the damper holder part 610. In this case, the user may feel mid-to-end braking performance.

With reference to FIG. 7, when the motor M is not operated by a back-up braking signal of the controller C, the hydraulic pressure reaction force to be applied to the screw bolt part 310 is not generated. When the user pushes the pedal, the pedal simulator part 600 slides in the housing part 100 (in the leftward direction based on FIG. 7), the bolt body part 310 slides in the gear part 200 (in the leftward direction based on FIG. 7), and the nut part 320 coupled to the screw shaft 312 is also moved, such that the hydraulic braking pressure is formed in the master cylinder part 500 by the piston part 400 coupled to the nut body part 321. A pressing plate 313 of the screw bolt part 310 presses the anti-rotation part 322, and thereby the nut part 320 moves forward.

The brake device 1 for a vehicle according to the embodiment of the present disclosure may improve regenerative braking performance and increase the amount of regenerative braking.

The brake device 1 for a vehicle according to the embodiment of the present disclosure may minimize an increase in number of components and implement pedal pressure feel without increasing a layout.

The brake device 1 for a vehicle according to the embodiment of the present disclosure may reduce heterogeneity of a pedal effort during regenerative braking.

## Claims

1. A brake device (1) for a vehicle, the brake device (1) comprising:
a housing part (100);
a gear part (200) rotatably disposed at the housing part (100) and configured to rotate in response to a rotational force received from a motor;
a motion conversion part (300) housed within the housing part (100), coupled to the gear part (200), and configured to convert a rotational motion of the gear part (200) into a rectilinear motion;
a piston part (400) coupled to the motion conversion part (300) and configured to be rectilinearly movable;
a master cylinder part (500) coupled to a first side of the housing part (100), wherein the piston part (400) is inserted into the master cylinder part (500); and
a pedal simulator part (600) slidably disposed at a second side of the housing part (100) and coupled to the motion conversion part (300),
**characterized in that** the motion conversion part (300) comprises:
a screw bolt part (310) slidably coupled to the gear part (200) and configured to rotate together with the gear part (200); and
a nut part (320) coupled to the screw bolt part (310) and configured to move along the screw bolt part (310).

2. The brake device (1) for the vehicle of claim 1, further comprising a first bearing part (700) disposed within the housing part (100), wherein the gear part (200) is rotatably coupled to the first bearing part (700).

3. The brake device (1) for the vehicle of claim 1 or 2, wherein the piston part (400) is coupled to the nut part (320) and configured to move together with the nut part (320).

4. The brake device (1) for the vehicle of any one of claims 1 to 3, further comprising a first elastic part (800) disposed within the housing part (100) and configured to elastically support the nut part (320).

5. The brake device (1) for the vehicle of claim 4, wherein the nut part (320) comprises:
a nut body part (321) spirally coupled to the screw bolt part (310); and
an anti-rotation part (322) disposed on the nut body part (321) and configured to restrict a rotation of the nut body part (321).

6. The brake device (1) for the vehicle of claim 5, wherein the anti-rotation part (322) comprises:
a first seating portion (322a) protruding from the nut body part (321), wherein the first elastic part (800) is disposed on the first seating portion (322a); and
a protruding portion (322b) protruding from the first seating portion (322a) and adjoining an inner surface of the housing part (100).

7. The brake device (1) for the vehicle of claim 5 or 6, wherein the screw bolt part (310) comprises:
a bolt body part (311) slidably and axially coupled to an inner side of the gear part (200); and
a screw shaft (312) provided at the bolt body part (311) and spirally coupled to the nut body part (321), wherein the nut body part (321) rectilinearly moves along the screw shaft (312).

8. The brake device (1) for the vehicle of claim 7, wherein the bolt body part (311) has a prismatic shape.

9. The brake device (1) for the vehicle of claim 7 or 8, wherein the bolt body part (311) has a hollow shape.

10. The brake device (1) for the vehicle of any one of claims 7 to 9, wherein the pedal simulator part (600) comprises:
a damper holder part (610) slidably disposed within the housing part (100), wherein the bolt body part (311) is rotatably coupled to the damper holder part (610);
a damper piston part (620) slidably disposed on the damper holder part (610);
a damper part (630) coupled to the damper piston part (620), accommodated in the damper holder part (610), and configured to be compressed by a movement of the damper piston part (620);
a damper pressing part (640) coupled to the damper piston part (620) and configured to press the damper piston part (620); and
a second elastic part disposed between the damper pressing part (640) and the damper holder part (610) and configured to elastically support the damper pressing part (640).

11. The brake device (1) for the vehicle of claim 10, wherein the damper holder part (610) comprises:
a holder body portion (611) slidably coupled to an inner side of the housing part (100); and
a holder protruding portion (612) protruding from an outer surface of the holder body portion (611) and having a portion extending into the bolt body part (311).

12. The brake device (1) for the vehicle of claim 10 or 11, wherein the damper pressing part (640) comprises:
a push rod portion (641) rotatably coupled to the damper piston part (620); and
a second seating portion (642), to which the push rod portion (641) is axially coupled and on which the second elastic part is disposed.

13. The brake device (1) for the vehicle of any one of claims 10 to 12, further comprising a second bearing portion (613) disposed on the damper holder part (610), wherein the bolt body part (311) is disposed on the second bearing portion (613), and the second bearing portion (613) is configured to support the bolt body part (311) so that the bolt body part (311) is rotatable.

14. The brake device (1) for the vehicle of claim 1, wherein the piston part (400) is inserted into the master cylinder part (500) to generate a hydraulic pressure, and
wherein the pedal simulator part (600) is configured:
not to move by a reaction force of the hydraulic pressure when the motor is operated, and
to slidably move when the motor is not operated.

## Patentansprüche

1. Bremsvorrichtung (1) für ein Fahrzeug, wobei die Bremsvorrichtung (1) umfasst:
ein Gehäuseteil (100);
ein Getriebeteil (200), das drehbar an dem Gehäuseteil (100) angeordnet ist und dazu eingerichtet ist, sich als Reaktion auf eine von einem Motor empfangene Drehkraft zu drehen;
ein Bewegungsumwandlungsteil (300), das in dem Gehäuseteil (100) untergebracht ist, mit dem Getriebeteil (200) gekoppelt ist und dazu eingerichtet ist, eine Rotationsbewegung des Getriebeteils (200) in eine geradlinige Bewegung umzuwandeln;
ein Kolbenteil (400), das mit dem Bewegungsumwandlungsteil (300) gekoppelt ist und dazu eingerichtet ist, geradlinig bewegbar zu sein;
ein Hauptzylinderteil (500), das mit einer ersten Seite des Gehäuseteils (100) gekoppelt ist, wobei das Kolbenteil (400) in das Hauptzylinderteil (500) eingesetzt ist; und
ein Pedalsimulatorteil (600), das verschiebbar an einer zweiten Seite des Gehäuseteils (100) angeordnet ist und mit dem Bewegungsumwandlungsteil (300) gekoppelt ist,
**dadurch gekennzeichnet, dass** das Bewegungsumwandlungsteil (300) umfasst:
ein Schraubbolzenteil (310), das verschiebbar mit dem Getriebeteil (200) gekoppelt ist und dazu eingerichtet ist, sich zusammen mit dem Getriebeteil (200) zu drehen; und
ein Mutterteil (320), das mit dem Schraubbolzenteil (310) gekoppelt ist und dazu eingerichtet ist, sich entlang des Schraubbolzenteils (310) zu bewegen.

2. Bremsvorrichtung (1) für das Fahrzeug nach Anspruch 1, weiterhin umfassend ein erstes Lagerteil (700), das in dem Gehäuseteil (100) angeordnet ist, wobei das Getriebeteil (200) drehbar mit dem ersten Lagerteil (700) gekoppelt ist.

3. Bremsvorrichtung (1) für das Fahrzeug nach Anspruch 1 oder 2, wobei das Kolbenteil (400) mit dem Mutterteil (320) gekoppelt ist und dazu eingerichtet ist, sich zusammen mit dem Mutterteil (320) zu bewegen.

4. Bremsvorrichtung (1) für das Fahrzeug nach einem der Ansprüche 1 bis 3, weiterhin umfassend ein erstes elastisches Teil (800), das in dem Gehäuseteil (100) angeordnet ist und dazu eingerichtet ist, das Mutterteil (320) elastisch zu stützen.

5. Bremsvorrichtung (1) für das Fahrzeug nach Anspruch 4, wobei das Mutterteil (320) umfasst:
ein Mutterkörperteil (321), das spiralförmig mit dem Schraubbolzenteil (310) gekoppelt ist; und
ein Verdrehsicherungsteil (322), das an dem Mutterkörperteil (321) angeordnet ist und dazu eingerichtet ist, eine Drehung des Mutterkörperteils (321) zu begrenzen.

6. Bremsvorrichtung (1) für das Fahrzeug nach Anspruch 5, wobei das Verdrehsicherungsteil (322) umfasst:
einen ersten Aufnahmeabschnitt (322a), der von dem Mutterkörperteil (321) vorsteht, wobei das erste elastische Teil (800) an dem ersten Aufnahmeabschnitt (322a) angeordnet ist; und
einen vorstehenden Abschnitt (322b), der von dem ersten Aufnahmeabschnitt (322a) vorsteht und an eine Innenfläche des Gehäuseteils (100) angrenzt.

7. Bremsvorrichtung (1) für das Fahrzeug nach Anspruch 5 oder 6, wobei das Schraubbolzenteil (310) umfasst:
ein Bolzenkörperteil (311), das verschiebbar und axial mit einer Innenseite des Getriebeteils (200) gekoppelt ist; und
einen Schraubenschaft (312), der an dem Bolzenkörperteil (311) vorgesehen ist und spiralförmig mit dem Mutterkörperteil (321) gekoppelt ist, wobei sich das Mutterkörperteil (321) geradlinig entlang des Schraubenschafts (312) bewegt.

8. Bremsvorrichtung (1) für das Fahrzeug nach Anspruch 7, wobei das Bolzenkörperteil (311) eine prismatische Form aufweist.

9. Bremsvorrichtung (1) für das Fahrzeug nach Anspruch 7 oder 8, wobei das Bolzenkörperteil (311) eine hohle Form aufweist.

10. Bremsvorrichtung (1) für das Fahrzeug nach einem der Ansprüche 7 bis 9, wobei das Pedalsimulatorteil (600) umfasst:
ein Dämpferhalterteil (610), das verschiebbar in dem Gehäuseteil (100) angeordnet ist, wobei das Bolzenkörperteil (311) drehbar mit dem Dämpferhalterteil (610) gekoppelt ist;
ein Dämpferkolbenteil (620), das verschiebbar an dem Dämpferhalterteil (610) angeordnet ist;
ein Dämpferteil (630), das mit dem Dämpferkolbenteil (620) gekoppelt ist, in dem Dämpferhalterteil (610) aufgenommen ist und dazu eingerichtet ist, durch eine Bewegung des Dämpferkolbenteils (620) komprimiert zu werden;
ein Dämpferdrückteil (640), das mit dem Dämpferkolbenteil (620) gekoppelt ist und dazu eingerichtet ist, das Dämpferkolbenteil (620) zu drücken; und
ein zweites elastisches Teil, das zwischen dem Dämpferdrückteil (640) und dem Dämpferhalterteil (610) angeordnet ist und dazu eingerichtet ist, das Dämpferdrückteil (640) elastisch zu stützen.

11. Bremsvorrichtung (1) für das Fahrzeug nach Anspruch 10, wobei das Dämpferhalterteil (610) umfasst:
einen Halterkörperabschnitt (611), der verschiebbar mit einer Innenseite des Gehäuseteils (100) gekoppelt ist; und
einen Haltervorsprungsabschnitt (612), der von einer Außenfläche des Halterkörperabschnitts (611) vorsteht und einen Abschnitt aufweist, der sich in das Bolzenkörperteil (311) erstreckt.

12. Bremsvorrichtung (1) für das Fahrzeug nach Anspruch 10 oder 11, wobei das Dämpferdrückteil (640) umfasst:
einen Schubstangenabschnitt (641), der drehbar mit dem Dämpferkolbenteil (620) gekoppelt ist; und
einen zweiten Aufnahmeabschnitt (642), mit dem der Schubstangenabschnitt (641) axial gekoppelt ist und an dem das zweite elastische Teil angeordnet ist.

13. Bremsvorrichtung (1) für das Fahrzeug nach einem der Ansprüche 10 bis 12, ferner umfassend einen zweiten Lagerabschnitt (613), der an dem Dämpferhalterteil (610) angeordnet ist, wobei das Bolzenkörperteil (311) an dem zweiten Lagerabschnitt (613) angeordnet ist und der zweite Lagerabschnitt (613) dazu eingerichtet ist, das Bolzenkörperteil (311) so zu stützen, dass das Bolzenkörperteil (311) drehbar ist.

14. Bremsvorrichtung (1) für das Fahrzeug nach Anspruch 1, wobei das Kolbenteil (400) in das Hauptzylinderteil (500) eingesetzt ist, um einen hydraulischen Druck zu erzeugen, und
wobei das Pedalsimulatorteil (600) dazu eingerichtet ist:
sich durch eine Reaktionskraft des hydraulischen Drucks nicht zu bewegen, wenn der Motor betrieben wird, und
sich verschiebbar zu bewegen, wenn der Motor nicht betrieben wird.

## Revendications

1. Dispositif de freinage (1) pour un véhicule, le dispositif de freinage (1) comprenant:
une partie logement (100);
une partie roue dentée (200) disposée en rotation sur la partie logement (100) et conçue pour tourner en réponse à une force de rotation reçue d'un moteur;
une partie de conversion de mouvement (300) logée dans la partie logement (100), couplée à la partie engrenage (200) et conçue pour convertir un mouvement de rotation de la partie roue dentée (200) en un mouvement rectiligne;
une partie piston (400) couplée à la partie de conversion de mouvement (300) et conçue pour être mobile de manière rectiligne;
une partie maître-cylindre (500) couplée à un premier côté de la partie logement (100), la partie piston (400) est insérée dans la partie maître-cylindre (500); et
une partie simulateur de pédale (600) disposée en coulissement sur un deuxième côté de la partie logement (100) et couplée à la partie conversion de mouvement (300),
**caractérisé en ce que** la partie de conversion de mouvement (300) comprend:
une partie boulon fileté (310) couplée en coulissement à la partie roue dentée (200) et conçue pour tourner avec la partie roue dentée (200); et
une partie écrou (320) couplée à la partie boulon fileté (310) et conçue pour se déplacer le long de la partie boulon fileté (310).

2. Dispositif de freinage (1) pour le véhicule selon la revendication 1, comprenant en outre une première partie palier (700) disposée à l'intérieur de la partie logement (100), la partie roue dentée (200) étant accouplée en rotation à la première partie palier (700).

3. Dispositif de freinage (1) pour le véhicule selon la revendication 1 ou 2, dans lequel la partie piston (400) est accouplée à la partie écrou (320) et conçue pour se déplacer conjointement avec la partie écrou (320).

4. Dispositif de freinage (1) pour le véhicule selon l'une quelconque des revendications 1 à 3, comprenant en outre une première partie élastique (800) disposée à l'intérieur de la partie logement (100) et conçue pour supporter élastiquement la partie écrou (320).

5. Dispositif de freinage (1) pour le véhicule selon la revendication 4, dans lequel la partie écrou (320) comprend:
une partie de corps d'écrou (321) accouplée en spirale à la partie de boulon fileté (310); et
une partie anti-rotation (322) disposée sur la partie corps d'écrou (321) et conçue pour limiter la rotation de la partie corps d'écrou (321).

6. Dispositif de freinage (1) pour le véhicule selon la revendication 5, dans lequel partie anti-rotation (322) comprend:
une première partie d'appui (322a) faisant saillie de la partie de corps d'écrou (321), la première partie élastique (800) étant disposée sur la première partie d'appui (322a); et
une partie en saillie (322b) faisant saillie de la première partie d'appui (322a) et adjacente à une surface intérieure de la partie logement (100).

7. Dispositif de freinage (1) pour le véhicule selon la revendication 5 ou 6, dans lequel la partie boulon fileté (310) comprend:
une partie de corps de boulon (311) accouplée en coulissement et axialement à un côté intérieur de la partie roue dentée (200); et
une tige fileté (312) disposée au niveau de la partie de corps de boulon (311) et accouplée de manière hélicoïdale à la partie de corps d'écrou (321), la partie de corps d'écrou (321) se déplaçant de manière rectiligne le long de la tige filetée (312).

8. Dispositif de freinage (1) pour le véhicule selon la revendication 7, dans lequel la partie de corps du boulon (311) a une forme prismatique.

9. Dispositif de freinage (1) pour le véhicule selon la revendication 7 ou 8, dans lequel la partie de corps de boulon (311) est creuse.

10. Dispositif de freinage (1) pour le véhicule selon l'une quelconque des revendications 7 à 9, dans lequel la partie simulateur de pédale (600) comprend:
une partie de support d'amortisseur (610) disposée en coulissement à l'intérieur de la partie logement (100), dans lequel la partie de corps de boulon (311) est couplée en rotation à la partie de support d'amortisseur (610);
une partie piston d'amortisseur (620) disposée en coulissement sur la partie support d'amortisseur (610);
une partie amortisseur (630) couplée à la partie de piston d'amortisseur (620), logée dans la partie support d'amortisseur (610) et conçue pour être comprimée par un mouvement de la partie piston d'amortisseur (620) ;
une partie de pression d'amortisseur (640) couplée à la partie piston d'amortisseur (620) et conçue pour presser la partie piston d'amortisseur (620); et
une deuxième partie élastique disposée entre la partie de pression d'amortisseur (640) et la partie support d'amortisseur (610) et conçue pour supporter élastiquement la partie de pression d'amortisseur (640).

11. Dispositif de freinage (1) pour le véhicule selon la revendication 10, dans lequel la partie support d'amortisseur (610) comprend:
une partie de corps de support (611) couplée en coulissement à un côté intérieur de la partie logement (100) ; et
une partie saillante (612) de support faisant saillie depuis une surface extérieure de la partie de corps de support (611) et comportant une partie s'étendant dans la partie de corps de boulon (311).

12. Dispositif de freinage (1) pour le véhicule selon la revendication 10 ou 11, dans lequel la partie de pression d'amortisseur (640) comprend:
une partie tige de poussée (641) couplée en rotation à la partie piston d'amortisseur (620); et
une deuxième partie d'appui (642), à laquelle la partie tige de poussée (641) est couplée axialement et sur laquelle est disposée la deuxième partie élastique.

13. Dispositif de freinage (1) pour le véhicule selon l'une quelconque des revendications 10 à 12, comprenant en outre une deuxième partie d'appui (613) disposée sur la partie de support d'amortisseur (610), la partie de corps de boulon (311) étant disposée sur la deuxième partie d'appui (613), et la deuxième partie d'appui (613) étant conçue pour supporter la partie de corps de boulon (311) de telle sorte que la partie de corps de boulon (311) puisse tourner.

14. Dispositif de freinage (1) pour le véhicule selon la revendication 1, dans lequel la partie piston (400) est insérée dans la partie maître-cylindre (500) afin de générer une pression hydraulique, et
dans lequel la partie simulateur de pédale (600) est conçue:
ne pas bouger sous l'effet d'une force de réaction de la pression hydraulique lorsque le moteur est en marche, et
pour se déplacer en coulissement lorsque le moteur ne fonctionne pas.
